# EUROPEAN PATENT SPECIFICATION

(11) **EP 1 477 348 B1**
(45) Date of publication and mention of the grant of the patent: **15.02.2006**
(21) Application number: 04011581.8
(22) Date of filing: 14.05.2004
(51) Int. Cl.: B60H 1/32, F25B 45/00

(54) **Refrigeration cycle device**
Kühlkreisvorrichtung
Appareil à cycle de réfrigération

(30) Priority: 16.05.2003 JP 2003139569
(43) Date of publication of application: 17.11.2004
(73) Proprietor: KABUSHIKI KAISHA TOYOTA JIDOSHOKKI, Kariya-shi, Aichi-ken (JP)
(72) Inventor: Wang, Xiaoliang, Kariya-shi Aichi-ken (JP); Iguchi, Masao, Kariya-shi Aichi-ken (JP); Kawaguchi, Masahiro, Kariya-shi Aichi-ken (JP)
(74) Representative: HOFFMANN EITLE

(56) References cited:
- WO-A-20/04054827
- US-A1- 2003 159 455
- PATENT ABSTRACTS OF JAPAN vol. 2000, no. 07, 29 September 2000 (2000-09-29) -& JP 2000 094953 A (MITSUBISHI MOTORS CORP), 4 April 2000 (2000-04-04)
- PATENT ABSTRACTS OF JAPAN vol. 2003, no. 12, 5 December 2003 (2003-12-05) & JP 2003 312240 A (DENSO CORP), 6 November 2003 (2003-11-06)

## Description

### BACKGROUND OF THE INVENTION

The present invention relates to a refrigeration cycle device for use in a vehicle air conditioner, that is, an air conditioner for a passenger compartment.

A refrigeration cycle device for use in an automotive air conditioner generally has a vapor compression type refrigerant circuit in which a compressor, a condenser, a decompressor and an evaporator are connected in series. The vapor compression type refrigerant circuit employs an automotive internal combustion engine as a drive source for the compressor. Therefore, there has been a problem that the compressor does not perform cooling when the engine is at a stop such as during so-called "idle stop" when the engine is stopped automatically, for example, at a red traffic light for the sake of fuel consumption.

To solve the above problem, there is a refrigeration cycle device disclosed in pages 2 and 3 and FIG. 1 of Unexamined Japanese Patent Publication No. 2001-58512, in which there is provided a heat pipe including an evaporator of the refrigerant circuit and a cool storage unit disposed in parallel relation to the evaporator. In this refrigeration cycle device, cool storage is accomplished by freezing cool storage medium of the cool storage unit by low temperature refrigerant flowing through the cool storage unit during the operation of the refrigeration cycle device with the engine running. While the engine is at a stop, liquid refrigerant cooled by the cool storage medium flows from the cool storage unit into the evaporator for cooling the air blowing into the passenger compartment.

In the above disclosed prior art, the cool storage medium performs cool storage and cool radiation. Accordingly, a heat exchanger is required for exchanging heat between the cool storage medium and the refrigerant. This only makes the cool storage disadvantageously large in size and causes insufficient cool storage and cool radiation because of heat loss due to the addition of a heat exchanger. Additionally, in order to allow the cooling to be continued for a long time after an engine stop, a large amount of heat insulating material is required for insulating the cool storage unit (the cool storage medium) from ambient air, thus making the cool storage unit larger in size. Therefore, there is a need for providing a refrigeration cycle device that performs cool storage and cool radiation efficiently while not growing the size of the structure for cool storage.

The Japanese Patent Publication No: 2 003 312 240 shows an air-conditioner for vehicle which does not require sophisticate insulating Technology and exhibits sufficient capability when idle-stop operation is carried out.

The Patent Publication No: US 2003/0159455 shows an air conditioner for an economically running vehicle with a cold-storage heat exchanger having a cold-storage material. The evaporator and the cold-storage heat exchanger are disposed in series in a refrigerant flow.

JP 2 000 094 953 shows an air conditioner with an evaporator connected in series with a thermal store for the storage of cold delivered to the evaporator during stand still intervals.

### SUMMARY OF THE INVENTION

In accordance with the present invention, a refrigeration cycle device has a refrigerant circuit, a liquid receiver, a reaction casing, a cool radiation evaporator and a cool storage/radiation controller. The liquid receiver is disposed in the refrigerant circuit for accumulating liquid refrigerant. The reaction casing is connected to the liquid receiver. The reaction casing selectively serves as a release device for releasing refrigerant gas and as a recovery device for recovering the refrigerant gas. The cool radiation evaporator is disposed in a refrigerant passage between the liquid receiver and the reaction casing when the reaction casing serves as the recovery device. The cool radiation evaporator heats the liquid refrigerant sent from the liquid receiver. The cool storage/radiation controller controls the reaction casing to serve as one of the release device for performing cool storage and the recovery device for performing cool radiation.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a schematic view of a refrigerant circuit device in a regu lar mode according to a first preferred embodiment of the present invention;
FIG. 2 is a schematic view of the refrigerant circuit device in a cool storage mode according to the first preferred embodiment of the present invention;
FIG. 3 is a schematic view of the refrigerant circuit device in a cool radiation mode during engine operation according to the first preferred embodiment of the present invention;
FIG. 4 is a schematic view of the refrigerant circuit device in a cool radiation mode during engine stop according to the first preferred embodiment of the present invention;
FIG. 5 is a flow chart showing a control by an air conditioner ECU according to the first preferred embodiment of the present invention;
FIG. 6 is a schematic view of a refrigerant circuit device according to a second preferred embodiment of the present invention;
FIG. 7 is a schematic view of a refrigerant circuit device according to a third preferred embodiment of the present invention;
FIG. 8 is a schematic view of a refrigerant circuit device according to a fourth preferred embodiment of the present invention;
FIG. 9 is a schematic view of a relevant part of a refrigerant circuit device according to a fifth preferred embodiment of the present invention;
FIG. 10 is a schematic view of a relevant part of a refrigerant circuit device according to a sixth preferred embodiment of the present invention;
FIG. 11 A is a schematic view of a relevant part of a refrigerant circuit device according to a seventh preferred embodiment of the present invention; and
FIG. 11 B is a schematic view of the relevant part of the refrigerant circuit device according to the seventh preferred embodiment of the present invention.

### DETAILED DESCRIPTION OF THE PREFERRED EMBODIMENTS

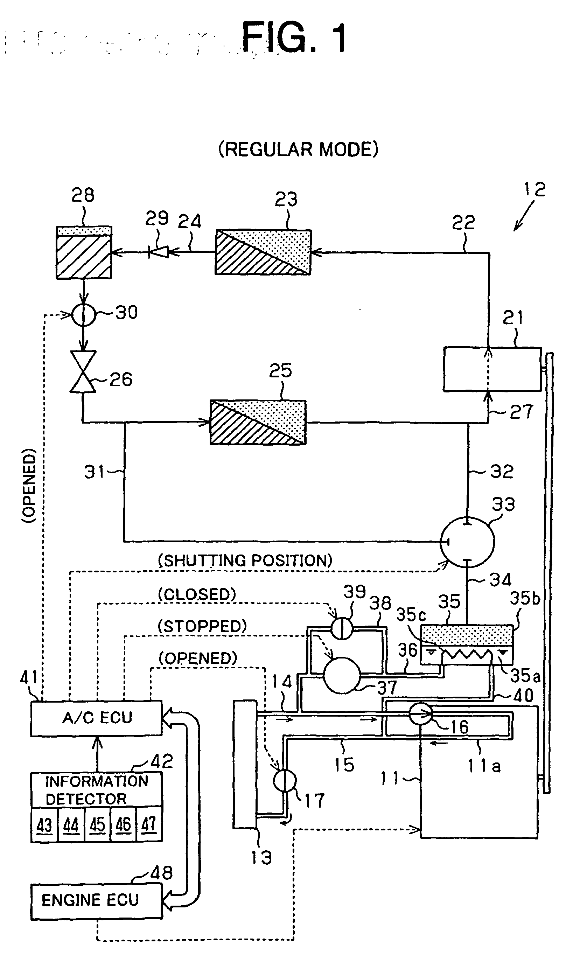

A first preferred embodiment of the present invention will now be described with reference to FIGS. 1 through 5.

FIG. 1 is a schematic block diagram illustrating an internal combustion engine or a drive source 11 for driving a vehicle and a refrigeration cycle device 12 for a vehicle (passenger compartment) air conditioner. The vehicle is an idle stop type or a hybrid type, and including a known structure (not shown) for idle stop control by which the engine 11 in idling is automatically stopped, for example, at a red traffic light.

The refrigeration cycle device 12 has a vapor compression type refrigerant circuit which includes a compressor 21 driven by the engine 11 and operable to discharge high temperature and high pressure refrigerant gas, such as R134a. The high pressure (or discharge) side of the compressor 21 is connected to the inlet side of a condenser 23 through a refrigerant conduit 22.

The condenser 23 is arranged in an engine room of the vehicle and exposed to ambient air. The refrigerant gas of high temperature and high pressure discharged from the compressor 21 and flown into the condenser 23 is cooled through exchanging heat with the ambient air, so that the refrigerant gas is condensed and hence liquefied. The condenser 23 is connected at its outlet side through a refrigerant conduit 24 to the inlet side of a cycle evaporator 25 which doubles as a cool radiation evaporator. The cycle evaporator 25 is disposed in the middle of an air blow duct (not shown) that connects with the passenger compartment. An expansion valve or a decompressor 26 is disposed in the refrigerant conduit 24 for decompressing liquid refrigerant sent from the condenser 23. The opening degree of the expansion valve 26 is feedback controlled in response to outlet pressure of the cycle evaporator 25.

The liquid refrigerant decompressed by the expansion valve 26 is heated and vaporized by the cycle evaporator 25 by exchanging heat with air flowing toward the passenger compartment, thus becoming relatively low pressure refrigerant gas. The outlet side of the cycle evaporator 25 and the low pressure side (suction side) of the compressor 21 are connected for communication through a refrigerant conduit 27. The compressor 21 sucks therein the refrigerant gas from the cycle evaporator 25 and compresses the refrigerant gas, and the compressed refrigerant gas is discharged to the condenser 23.

As shown in FIG. 1, in the refrigerant conduit 24, a liquid receiver 28 is disposed between the condenser 23 and the expansion valve 26 for accumulating the liquid refrigerant sent from the condenser 23. In other words, the liquid receiver 28 is disposed in the refrigerant circuit. The redundant refrigerant in the refrigerant circuit is accumulated as the liquid refrigerant in the liquid receiver 28 by operation of the refrigerant circuit.

In the refrigerant conduit 24, a check valve 29 is disposed between the condenser 23 and the liquid receiver 28 for preventing the refrigerant from flowing from the liquid receiver 28 to the condenser 23. In the refrigerant conduit 24, an electromagnetic first control valve 30 is disposed between the liquid receiver 28 and the expansion valve 26 for opening and closing the refrigerant conduit 24.

A first branch refrigerant conduit 31 is branched from the refrigerant conduit 24 between the expansion valve 26 and the cycle evaporator 25. A second branch refrigerant conduit 32 is branched from the refrigerant conduit 27. The first and second branch refrigerant conduits 31, 32 are respectively connected to an electromagnetic selector valve 33. A reaction casing 35 is connected to the selector valve 33 through a refrigerant conduit 34.

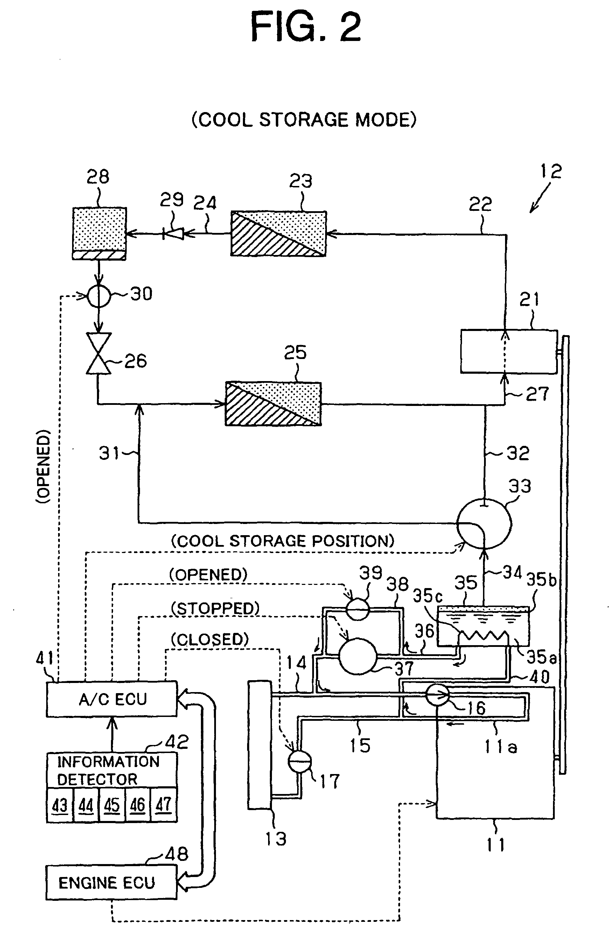

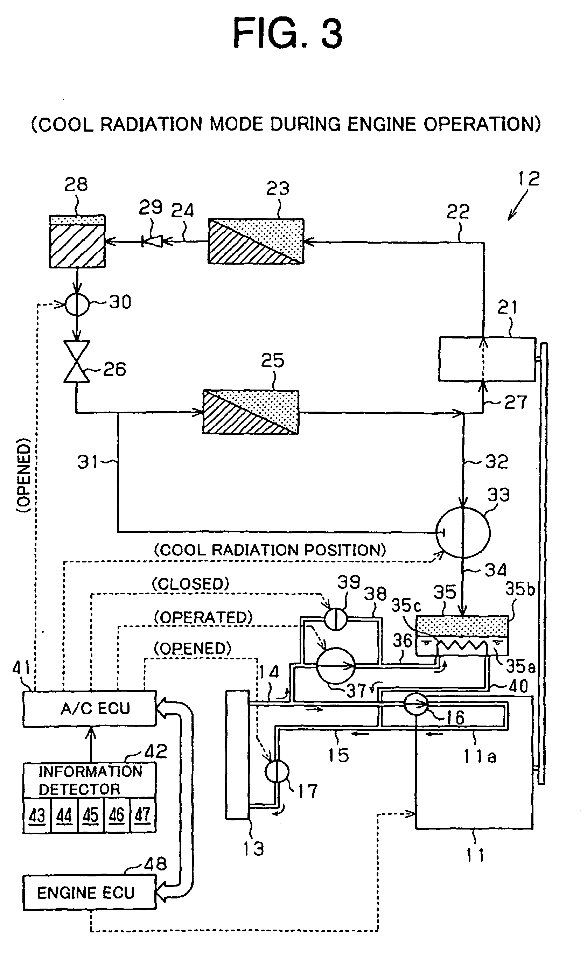

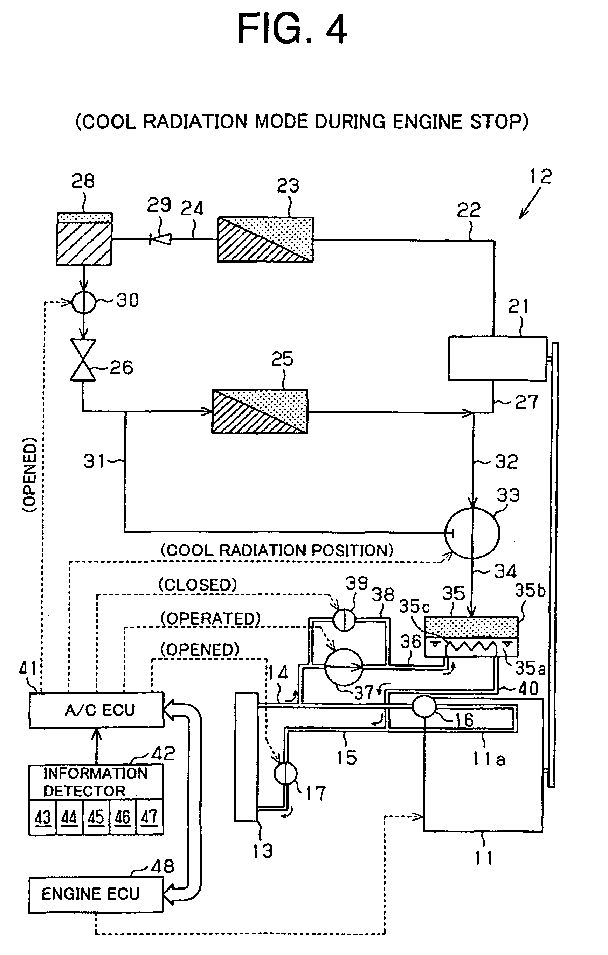

Three positions are selectable by the selector valve 33, i.e. a cool storage position (shown in FIG. 2) where the first branch refrigerant conduit 31 and the refrigerant conduit 34 are made in communication with each other, a cool radiation position (shown in FIGS. 3 and 4) where the second branch refrigerant conduit 32 and the refrigerant conduit 34 are made in communication with each other, and a shutting position (shown in FIG. 1) where the communications of the refrigerant conduit 34 with the respective first branch refrigerant conduit 31 and the second branch refrigerant conduit 32 are shut off.

The reaction casing 35 includes a cool storage/radiation absorbent 35a, a tank 35b and a heat exchanger 35c. The tank 35b accommodates the cool storage/radiation absorbent 35a, and the refrigerant conduit 34 communicates with a gaseous phase portion of the tank 35b. The heat exchanger 35c is arranged in the tank 35b. It is noted that the cool storage/radiation absorbent 35a includes dimethylethertetraethyleneglychol, dimethylformamide and the like.

A coolant passage 11 a is provided in the engine 11 and is connected at the inlet thereof to the outlet of a radiator 13 through a first coolant conduit 14 and at the outlet thereof to the inlet of the radiator 13 through a second coolant conduit 15. The engine 11 has a first water pump 16 which is driven by the engine 11 to feed coolant in the first coolant conduit 14 to the coolant passage 11 a in the engine 11. An electromagnetic second control valve 17 is disposed in the second coolant conduit 15.

A first branch coolant conduit 36 is branched from the first coolant conduit 14 and connected to one end of the heat exchanger 35c of the reaction casing 35. A second water pump 37 such as electric pump is disposed in the first branch coolant conduit 36 for feeding coolant in the first coolant conduit 14 to the heat exchanger 35c.

A by-pass conduit 38 is connected to the first branch coolant conduit 36 so as to bypass the second water pump 37. An electromagnetic third control valve 39 is disposed in the by-pass conduit 38. A second branch coolant conduit 40 is branched from the second coolant conduit 15 and connected to the other end of the heat exchanger 35c of the reaction casing 35.

As shown in FIG. 1, the refrigeration cycle device 12 has an air conditioner ECU 41 which is a control unit similar to a computer, including a CPU, an ROM, an RAM and an I/O interface, and which performs the controlling of the refrigeration cycle device 12. An information detector 42 is connected to the input terminal of the I/O interface of the air conditioner ECU 41. The information detector 42 includes an air conditioner switch 43, a pressure sensor 44, a temperature setting device 45, a compartment temperature sensor 46 and an ambient temperature sensor 47. The air conditioner switch 43 is an on-off switch of the refrigeration cycle device 12. The pressure sensor 44 is operable to detect the pressure in the tank 35b of the reaction casing 35. The temperature setting device 45 is used to set a target temperature in the passenger compartment, and the compartment temperature sensor 46 is operable to detect actual or current temperature in the passenger compartment. The ambient temperature sensor 47 is operable to detect the temperature of the ambient air.

The first control valve 30, the selector valve 33, the second control valve 17, the third control valve 39 and the second water pump 37 are respectively connected to the output terminal of the l/O of the air conditioner ECU 41, as indicated by dotted lines in FIG. 1, through drivers (not shown). An engine ECU 48 is connected to the air conditioner ECU 41 so as to be communicable therewith, and performs the controlling of the engine 11. The engine ECU 48 transmits to the air conditioner ECU 41 a signal of whether or not the engine 11 is operated.

The air conditioner ECU 41 determines the mode of air conditioning based upon various information obtained from the information detector 42 and the engine ECU 48. The air conditioning mode includes regular mode in which regular air conditioning is performed and cool storage mode in which cool storage is performed while the regular air conditioning is being performed. The mode further includes cool radiation mode during engine operation in which high thermal load is applied while the engine 11 is running and cool radiation mode during engine stop in which cooling is performed while the engine 11 is at a stop. The air conditioner ECU 41 controls the operation of the first control valve 30, the selector valve 33, the second control valve 17, the third control valve 39 and the second water pump 37 based upon the air conditioning mode determined by the air conditioner ECU 41.

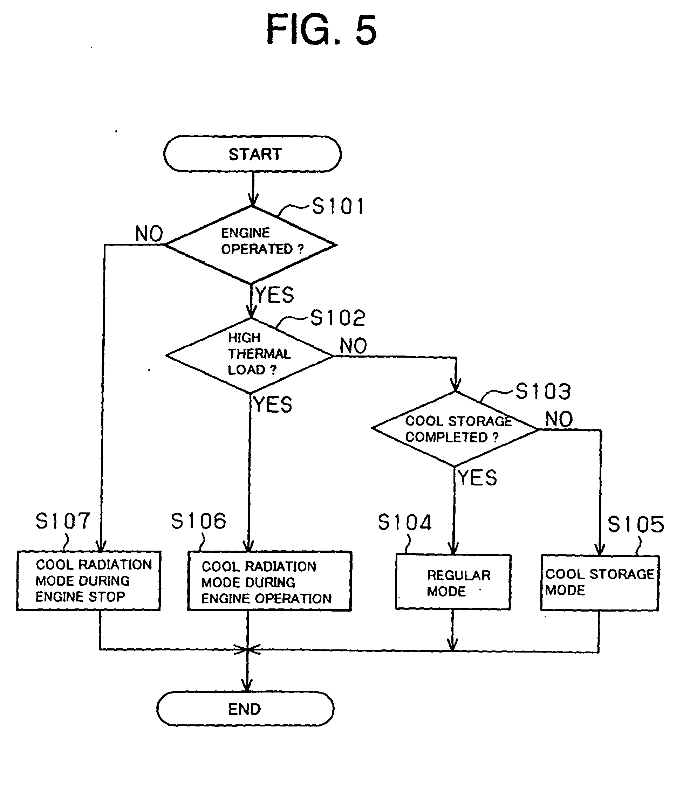

With the air conditioner switch 43 turned on, the air conditioner ECU 41 initiates controlling which is shown by the flow chart of FIG. 5 in accordance with a previously stored program. Prefix S followed by three-digit number in the flow chart of FIG. 5 means a step referred to in the following description.

At S101, the air conditioner ECU 41 determines whether or not the engine 11 is being operated based upon information provided by the engine ECU 48. If YES, that is, if the engine 11 is then being operated, the air conditioner ECU 41 proceeds to the next step S102 where it determines whether or not thermal load of the refrigerant circuit exceeds a predetermined value, that is, whether or not cooling capacity higher than a predetermined value is required for the refrigeration cycle device 12, based upon information detected by the temperature setting device 45, the compartment temperature sensor 46, the ambient temperature sensor 47 and the like. For example, when temperature information detected by the compartment temperature sensor 46 exceeds temperature information set by the temperature setting device 45 by a predetermined temperature, the air conditioner ECU 41 determines that thermal load of the refrigerant circuit exceeds a predetermined value.

If the air conditioner ECU 41 determines NO at S102, that is, if the refrigerant circuit is not in a high thermal load state, the air conditioner ECU 41 proceeds to the next step S103. At S103 the air conditioner ECU 41 determines whether or not the remainder of refrigerant in the reaction casing 35 exceeds a predetermined value, that is, whether or not cool storage (regeneration of refrigerant gas from the absorbent 35a) has been completed, based upon information detected by the pressure sensor 44.

If the determination at S103 is YES, that is, if thermal load of the refrigerant circuit is not high during operation of the engine 11, and additionally if cool storage has been completed, the air conditioner ECU 41 proceeds to the next step S104 that is the regular mode as air conditioning mode.

As indicated in FIG. 1 which shows the refrigeration cycle device 12 in its regular mode, the air conditioner ECU 41 then commands "the first control valve 30 to be opened", "the selector valve 33 to be located at the shutting position", "the second control valve 17 to be opened", "the third control valve 39 to be closed" and "the second water pump 37 to be stopped", respectively. In such a state, the compressor 21 is being driven by the engine 11, so that the refrigerant circuit is in operation, thereby to perform cooling. Low temperature coolant cooled by the radiator 13 is supplied by the first water pump 16 which is driven by the engine 11 to the coolant passage 11a in the engine 11 through the first coolant conduit 14.

If the determination at S103 is NO, that is, thermal load of the refrigerant circuit is not high during operation of the engine 11, and additionally if cool storage has not been completed, the air conditioner ECU 41 proceeds to the next step S105 that is the cool storage mode as the air conditioning mode.

As indicated in FIG. 2 which shows the refrigeration cycle device 12 in its cool storage mode, the air conditioner ECU 41 then commands "the first control valve 30 to be opened", "the selector valve 33 to be located at the cool storage position", "the second control valve 17 to be closed", "the third control valve 39 to be opened" and "the second water pump 37 to be stopped", respectively. In such a state, the refrigerant circuit is operated, thereby to perform cooling same as in the regular mode. High temperature coolant heated by exhaust heat from the engine 11 is supplied by the first water pump 16 to the heat exchanger 35c of the reaction casing 35 through the second coolant conduit 15 and the second branch coolant conduit 40. Accordingly, the cool storage/radiation absorbent 35a is heated in the reaction casing 35 due to heat radiation of the heat exchanger 35c, so that the refrigerant gas is regenerated from the cool storage/radiation absorbent 35a.

In summary, in the cool storage mode, the reaction casing 35 serves as a regenerator or a release device in such a manner that the air conditioner ECU or a cool storage/radiation controller 41 activates a heater. In the first preferred embodiment, a coolant circulation mechanism for allowing the reaction casing 35 to serve as a regenerator includes the first water pump 16, the coolant passage 11 a, the first coolant conduit 14, the second coolant conduit 15, the first branch coolant conduit 36, the second branch coolant conduit 40, the by-pass conduit 38, the second control valve 17, the third control valve 39, the heat exchanger 35c and the like, and is regarded as a heater together with the engine 11.

The refrigerant gas regenerated from the cool storage/radiation absorbent 35a is supplied to the refrigerant conduit 24, that is, to the refrigerant circuit, through the refrigerant conduit 34, the selector valve 33 and the first branch refrigerant conduit 31. The refrigerant gas supplied into the refrigerant conduit 24 from the reaction casing 35 joins the refrigerant gas flowing in the refrigerant conduit 24 and then circulates in the refrigerant circuit. The amount of refrigerant in the refrigerant circuit is excessive as being supplied with the refrigerant gas from the reaction casing 35. Thus, the redundant refrigerant in the refrigerant circuit is accumulated in the liquid receiver 28 as the liquid refrigerant.

It is noted that the low temperature coolant cooled by the heat exchanger 35c is supplied to the coolant passage 11 a in the engine 11 through the first branch coolant conduit 36 and the first coolant conduit 14, thereby cooling the engine 11.

If determination at S102 is YES, that is, if thermal load of the refrigerant circuit is high during operation of the engine 11, the air conditioner ECU 41 proceeds to the next step S106 that is the cool radiation mode during engine operation as the air conditioning mode. As shown in FIG. 3, the air conditioner ECU 41 commands in the cool radiation mode during engine operation "the first control valve 30 to be opened", "the selector valve 33 to be located at the cool radiation position", "the second control valve 17 to be opened", "the third control valve 39 to be closed" and "the second water pump 37 to be operated", respectively.

In such a state, the refrigerant circuit is operated to perform cooling same as in the regular mode. The low temperature coolant cooled by the radiator 13 is partially supplied by the first water pump 16 to the coolant passage 11a in the engine 11 through the first coolant conduit 14, thereby cooling the engine 11. In the cool radiation mode during engine operation, the cooling capacity of the refrigeration cycle device 12 is enhanced by allowing the reaction casing 35 to serve as an absorber or a recovery device in order to appropriately deal with relatively high thermal load which cannot be dealt with only by the refrigerant circuit.

In other words, part of the low temperature coolant cooled by the radiator 13 is supplied to the heat exchanger 35c of the reaction casing 35 through the first coolant conduit 14 and the first branch coolant conduit 36 by the second water pump 37. By so doing, the cool storage/radiation absorbent 35a in the reaction casing 35 is cooled due to heat absorption of the heat exchanger 35c, so that the refrigerant gas is absorbed into the cool storage/radiation absorbent 35a.

Accordingly, as refrigerant absorption capacity of the reaction casing 35 (the cool storage/radiation absorbent 35a) assists the refrigerant circuit together with the stored redundant liquid refrigerant in the liquid receiver 28, a large amount of liquid refrigerant which cannot be performed only by the refrigerant circuit flow into the cycle evaporator 25. As a result, the refrigeration cycle device 12 provides high cooling capacity which is capable of dealing with high thermal load.

If the determination at S101 is NO, that is, if the engine 11 is at a stop, the air conditioner ECU 41 proceeds to the next step S107 that is the cool radiation mode during engine stop as the air conditioning mode. As shown in FIG. 4, the air conditioner ECU 41 commands in the cool radiation mode during engine stop "the first control valve 30 to be opened", "the selector valve 33 to be located at the cool radiation position", "the second control valve 17 to be opened", "the third control valve 39 to be closed" and "the second water pump 37 to be operated", respectively.

In such a state, the low temperature coolant cooled by the radiator 13 is supplied to the heat exchanger 35c of the reaction casing 35 through the first coolant conduit 14 and the first branch coolant conduit 36 by the second water pump 37. Accordingly, the cool storage/radiation absorbent 35a in the reaction casing 35 is cooled due to heat absorption of the heat exchanger 35c, so that the refrigerant gas is absorbed into the cool storage/radiation absorbent 35a. In short, in the cool radiation mode during engine stop, the reaction casing 35 serves as an absorber same as in the cool radiation mode during engine operation.

The liquid refrigerant in the liquid receiver 28 flows into the expansion valve 26 through the first control valve 30 due to the absorption of the refrigerant gas in the reaction casing 35. The liquid refrigerant decompressed by the expansion valve 26 is heated through exchanging heat with the air flowing toward the passenger compartment in the cycle evaporator 25 and vaporized into low pressure refrigerant gas. Such low pressure refrigerant gas flows from the refrigerant conduit 27 (the refrigerant circuit) into the reaction casing 35 through the second branch refrigerant conduit 32 and the selector valve 33, and is absorbed into the cool storage/radiation absorbent 35a.

In summary, in both cool radiation modes during engine operation and engine stop, the reaction casing 35 serves as an absorber in such a manner that the air conditioner ECU or the cool storage/radiation controller 41 stops the heater, that is, by stopping supply of the high temperature coolant heated by exhaust heat from the engine 11. A coolant circulation mechanism for allowing the reaction casing 35 to effectively serve as an absorber includes the radiator 13, the second water pump 37, the coolant passage 11 a, the first coolant conduit 14, the second coolant conduit 15, the first branch coolant conduit 36, the second branch coolant conduit 40, the heat exchanger 35c and the like, and is regarded as a recovery accelerator.

Though not shown in any drawing, it is noted that when the air conditioner switch 43 is off with the engine 11 at a stop, that is, when there is no need of air conditioning, the air conditioner ECU 41 commands the first control valve 30 to be closed.

According to the first preferred embodiment, the following advantageous effects are obtained.
(1) Cool storage is performed by accumulating the liquid refrigerant in the liquid receiver 28 which is disposed in the refrigerant circuit. Accordingly, additional cool storage medium other than refrigerant is not required and, thereof, a heat exchanger is not required for exchanging heat between the refrigerant and the cool storage medium. Thus, the structure for cool storage is prevented from being large, and cool storage and cool radiation are efficiently performed. Additionally, the liquid refrigerant exists in the liquid receiver 28 at a temperature that is higher than, for example, the temperature of the cool storage medium which freezes to perform cool storage. Accordingly, the liquid receiver 28 needs no or only a little heat insulating material to keep the refrigerant in a liquid state, thereby helping prevent the structure of cool storage from being large.
(2) The liquid receiver 28 is disposed in the refrigerant passage between the outlet of the condenser 23 and the inlet of the expansion valve 26. Temperature of the refrigerant in the refrigerant passage between the outlet of the condenser 23 and the inlet of the expansion valve 26 is higher than that of the ambient air. Accordingly, the liquid receiver 28 is prevented from being heated by the ambient air, so that vaporization of the liquid refrigerant in the liquid receiver 28, that is, natural decrease in the amount of cool storage is prevented. This prevention enables the refrigerant circuit to deal with high thermal load for a long time in the operation of the cool radiation mode during engine operation, and also enables the refrigerant circuit to perform cooling for a long time in the operation of the cool radiation mode during engine stop.
(3) The reaction casing 35, which is heated by exhaust heat from the engine 11, serves as a regenerator. Such effective use of exhaust heat from the engine 11 improves fuel consumption of the vehicle and also cooling efficiency.
(4) The cycle evaporator 25 of the refrigerant circuit doubles as a cool radiation evaporator, thereby making possible making the refrigeration cycle device 12 simple and compact due to eliminating an exclusive device as cool radiation evaporator. Particularly, the use of the cycle evaporator 25 is advantageous in a vehicle having only a limited space for installation.
(5) A coolant circulation mechanism, which includes the radiator 13, the second water pump 37, the coolant passage 11 a, the first coolant conduit 14, the second coolant conduit 15, the first branch coolant conduit 36, the second branch coolant conduit 40, the heat exchanger 35c and the like, is provided for allowing the reaction casing 35 to effectively serve as an absorber. Accordingly, the reaction casing 35 which serves as an absorber has high performance, that is, the reaction casing 35 improves cooling capacity of the refrigerant circuit during operation both in the cool radiation mode during engine operation and the cool radiation mode during engine stop.
(6) The low temperature coolant, which is cooled by the radiator 13 and used also for cooling of the engine 11, is supplied for the reaction casing 35 which serves as an absorber to cool the reaction casing 35. This radiator 13 which is shared in common by the engine 11 and the reaction casing 35 simplifies the structure of the refrigeration cycle device 12. Particularly, it is used advantageously in a vehicle having a limited space.
(7) When the air conditioner switch 43 is off with the engine 11 at a stop, that is, when cooling is unnecessary, the air conditioner ECU 41 commands the first control valve 30 to be closed. By so doing, the liquid receiver 28 is then shut off by and between the closed first control valve 30 and the check valve 29, so that the liquid refrigerant is held by the liquid receiver 28 for a long time. That is, the first control valve 30 and the check valve 29 serves as a liquid receiver control valve. Thus, for example, when the engine 11 is started subsequent to a vehicle stop for a long time and the air conditioner switch 43 is turned on to select the cool radiation mode during engine operation as the air conditioning mode, satisfactory cooling is accomplished by utilizing the liquid refrigerant in the liquid receiver 28 even if start lag occurs in the refrigerant circuit.

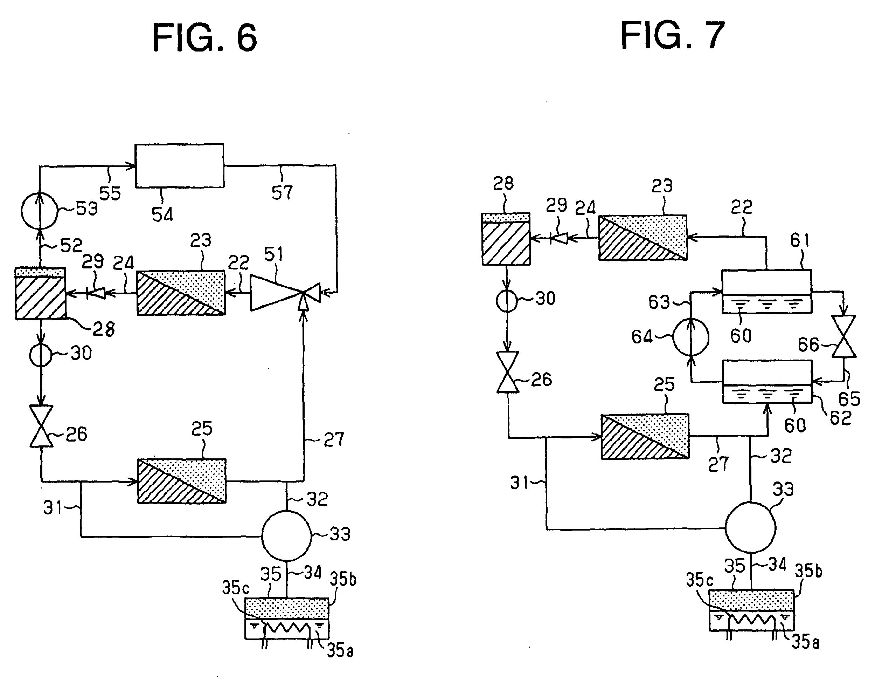

A second preferred embodiment of the present invention will now be described with reference to FIG. 6. The second preferred embodiment differs from the first preferred embodiment in that it employs a steam jet type refrigerant circuit.

The steam jet type refrigerant circuit has a cycle ejector 51 in place of the compressor 21 of the first preferred embodiment. The cycle ejector 51 is connected at the outlet or discharge side thereof to the inlet side of the condenser 23 through the refrigerant conduit 22, and at the inlet or suction side thereof to the outlet side of the cycle evaporator 25 through the refrigerant conduit 27.

A cycle pump 53 is connected at its inlet or suction side to the liquid receiver 28 through a branch refrigerant conduit 52. The cycle pump 53 is driven by the engine 11 shown in FIG. 1. A boiler 54 is connected at its inlet side to the outlet or discharge side of the cycle pump 53 through a refrigerant conduit 55. The cycle pump 53 draws part of the liquid refrigerant from the liquid receiver 28 and feeds the liquid refrigerant to the boiler 54. Though not described in detail herein, the coolant which is heated by exhaust heat from the engine 11 to a high temperature is sent to the boiler 54.

In the boiler 54, the liquid refrigerant is heated by heat exchanging between the high temperature coolant and the liquid refrigerant, thereby becoming refrigerant gas of high temperature and high pressure. The boiler 54 is connected at its outlet side to the driving side of the cycle ejector 51 through a refrigerant conduit 57. Accordingly, the cycle ejector 51 operates the high pressure refrigerant gas from the boiler 54 as a driving flow so as to absorb the low pressure refrigerant gas from the cycle evaporator 25, and the cycle ejector 51 mixes these refrigerant gas and discharges toward the condenser 23. The high temperature and high pressure refrigerant gas discharged from the cycle ejector 51 is sent to the condenser 23. The above steps are performed repeatedly.

According to the second preferred embodiment, the same advantageous effects as those of the first preferred embodiment are obtained. It is noted that the aforementioned advantageous effect (7) of the first preferred embodiment is achieved by the closed first control valve 30, the check valve 29 and the inoperative cycle pump 53. Additionally, exhaust heat from the engine 11 is used for operating the refrigerant circuit (driving the cycle ejector 51), thereby reducing fuel consumption of the vehicle.

A third preferred embodiment of the present invention will now be described with reference to FIG. 7. The third preferred embodiment differs from the first preferred embodiment in that it employs a vapor absorption type refrigerant circuit.

The vapor absorption type refrigerant circuit includes a cycle regenerator 61 and a cycle absorber 62. The cycle regenerator 61 regenerates the refrigerant gas from a cycle absorbent 60 and sends the refrigerant gas to the condenser 23. The cycle absorber 62 absorbs the refrigerant gas heated at the cycle evaporator 25 into the cycle absorbent 60. The cycle absorbent 60 includes dimethylethertetraethyleneglychol, dimethylformamide and the like.

Though not described in detail, the cycle regenerator 61 regenerates the refrigerant gas from the cycle absorbent 60 by heating the cycle absorbent 60 by using the high temperature coolant heated by exhaust heat from the engine 11. Additionally, the cycle absorber 62 absorbs the refrigerant gas into the cycle absorbent 60 by cooling the cycle absorbent 60 by using the low temperature coolant cooled by the radiator 13.

The outlet of the cycle absorbent 60 in the cycle absorber 62 and the inlet of the cycle absorbent 60 in the cycle regenerator 61 are in communication through a regenerating conduit 63. A cycle pump 64 is disposed in the regenerating conduit 63 for feeding the cycle absorbent 60 which has absorbed the refrigerant gas from the cycle absorber 62 to the cycle regenerator 61. The cycle pump 64 is driven by the engine 11 shown in FIG. 1.

The outlet of the cycle absorbent 60 in the cycle regenerator 61 and the inlet of the cycle absorbent 60 in the cycle absorber 62 are in communication through an absorbing conduit 65. An expansion valve 66 is disposed in the absorbing conduit 65 for decompressing the cycle absorbent 60 which is sent from the cycle regenerator 61 toward the cycle absorber 62.

According to the third preferred embodiment, the same advantageous effects as those of the first preferred embodiment are obtained. Additionally, exhaust heat from the engine 11 is used for operating the refrigerant circuit (or heating the cycle regenerator 61), thereby improving fuel consumption of the vehicle.

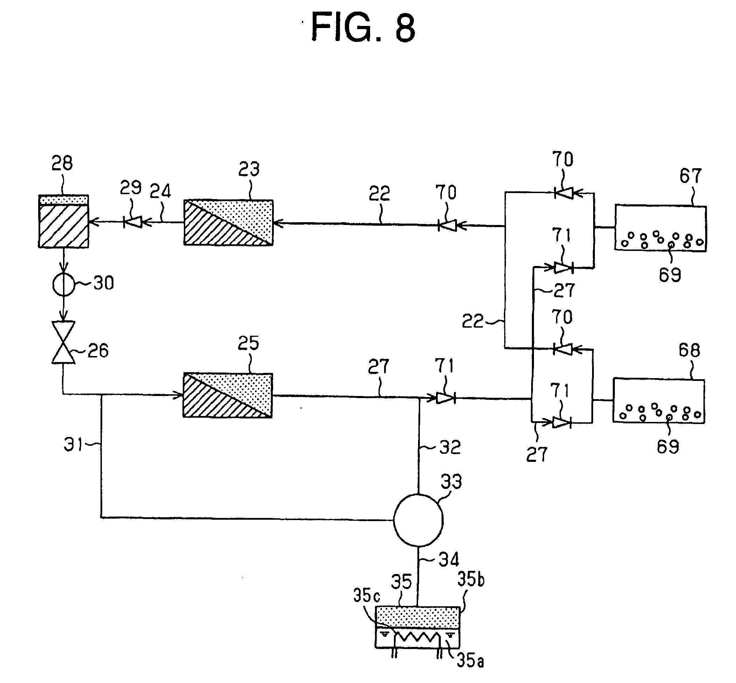

A fourth preferred embodiment of the present invention will now be described with reference to FIG. 8. The fourth preferred embodiment differs from the first preferred embodiment in that it employs a vapor adsorption type refrigerant circuit.

The vapor adsorption type refrigerant circuit includes a pair of heads 67, 68 in place of the compressor 21. Each of the heads 67, 68 accommodates an adsorbent 69. The liquid receiver 28 is disposed in the refrigerant passage between the outlet of the heads 67, 68 and the inlet of the cycle evaporator 25. The adsorbent 69 includes activated carbon. Though not described in detail, each of the heads 67, 68 allows the adsorbent 69 to desorb therefrom the refrigerant gas by heating the adsorbent 69 by using the high temperature coolant heated by exhaust heat from the engine 11. Additionally, each of the heads 67, 68 allows the adsorbent 69 to adsorb thereinto the refrigerant gas by cooling the adsorbent 69 by using the low temperature coolant cooled by the radiator 13.

The refrigerant conduit 22 is branched into two at one end and respectively connected to the heads 67, 68, while being connected at the other end to the condenser 23. Three check valves 70 are disposed in the refrigerant conduit 22, that is, one of the check valves 70 is near the condenser 23 from a branch point where the refrigerant conduit 22 is branched and the other two of the check valves 70 are near the heads 67, 68 from the branch point, in such a disposition that a refrigerant flow from the condenser 23 to the respective heads 67, 68 is prevented.

The refrigerant conduit 27 is branched into two branches at one end and respectively connected to the heads 67, 68, while being connected at the other end to the cycle evaporator 25. Three check valves 71 are disposed in the refrigerant conduit 27, that is, one of the check valves 71 is near the cycle evaporator 25 from a branch point where the refrigerant conduit 27 is branched and the other two of the check valves 71 are near the heads 67, 68 from the branch point, in such a disposition that the refrigerant is prevented from flowing from the respective heads 67, 68 to the cycle evaporator 25.

The refrigerant circuit is operated in such a manner that one of the heads 67, 68 is heated while the other is cooled. Additionally, the refrigerant circuit is continuously operated by alternately heating (or desorbing) and cooling (or adsorbing) the heads 67, 68.

According to the fourth preferred embodiment, the same advantageous effects as those of the first preferred embodiment are obtained. Additionally, exhaust heat from the engine 11 is used for operating the refrigerant circuit (heating the heads 67, 68), thereby reducing fuel consumption of the vehicle.

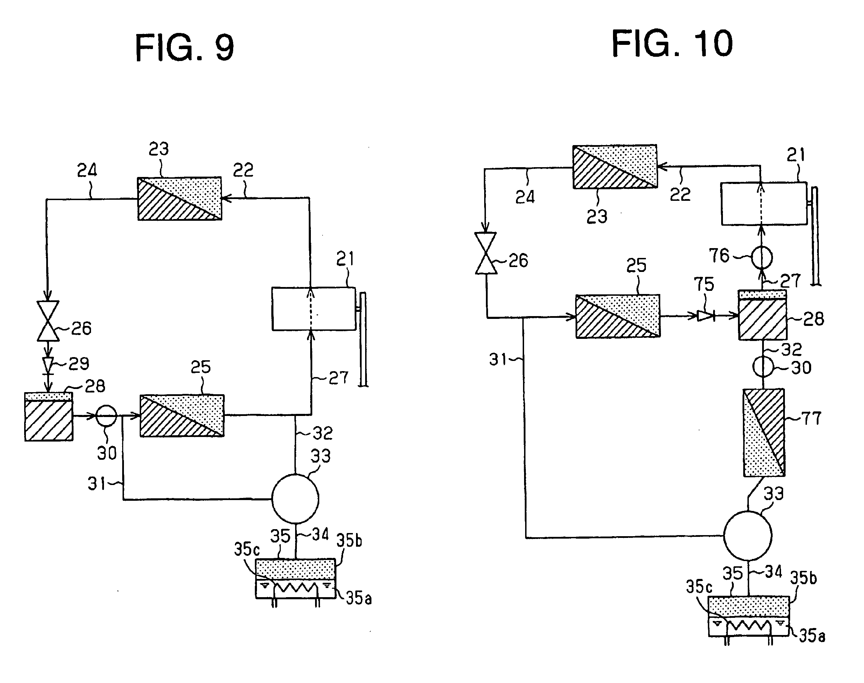

A fifth preferred embodiment of the present invention will now be described with reference to FIG. 9. The liquid receiver 28 is disposed in the refrigerant conduit 24 between the outlet of the expansion valve 26 and the inlet of the cycle evaporator 25. The first control valve 30 is disposed in the refrigerant conduit 24 between the liquid receiver 28 and the cycle evaporator 25. The first branch refrigerant conduit 31 is branched from the refrigerant conduit 24 between the first control valve 30 and the cycle evaporator 25. The check valve 29 is disposed in the refrigerant conduit 24 between the expansion valve 26 and the liquid receiver 28.

According to the fifth preferred embodiment, the same advantageous effects as those mentioned in the paragraphs (1), (3) through (7) of the first preferred embodiment are obtained. Additionally, the liquid receiver 28 is disposed between the expansion valve 26 and the cycle evaporator 25. The refrigerant passage between the expansion valve 26 and the cycle evaporator 25 is lower in enthalpy and hence higher in refrigerating capacity than the refrigerant passage between the outlet of the condenser 23 and the inlet of the expansion valve 26. As compared with a disposition in which, for example, the liquid receiver 28 is disposed in the refrigerant passage between the outlet of the condenser 23 and the inlet of the expansion valve 26, the fifth preferred embodiment of FIG. 9 makes it possible to reduce the volume of the liquid receiver 28, thus permitting the refrigeration cycle device 12 to be made compact. Apparently, the compactness is advantageous for a vehicle having only a limited space.

A sixth preferred embodiment of the present invention will now be described with reference to FIG. 10. The liquid receiver 2B is disposed in the refrigerant conduit 27 between the outlet of the cycle evaporator 25 and the low pressure side (or suction side) of the compressor 21. In the refrigerant conduit 27, a check valve 75 is disposed between the cycle evaporator 25 and the liquid receiver 28 for preventing the refrigerant from flowing from the compressor 21 back to the cycle evaporator 25. A fourth electromagnetic control valve 76 is disposed between the liquid receiver 28 and the compressor 21. When the air conditioner switch 43 is off while the engine 11 is at a stop, that is, there is no need for cooling, the air conditioner ECU 41 commands the fourth control valve 76 to be closed.

The second branch refrigerant conduit 32 is connected to the refrigerant circuit at the liquid receiver 28. The first control valve 30 is disposed in the second branch refrigerant conduit 32. A cool radiation evaporator 77 is disposed in the second branch refrigerant conduit 32 between the first control valve 30 and the selector valve 33. The cool radiation evaporator 77 is arranged on the way of an air blow duct (not shown) that connects with the passenger compartment. Thus, in the sixth preferred embodiment, the cool radiation evaporator 77 is provided in addition to the cycle evaporator 25.

The air conditioner ECU 41 commands the first control valve 30 to be closed during the regular mode and the cool storage mode, while the first control valve 30 is opened from the command of the air conditioner ECU 41 when the air conditioning is performed in the cool radiation mode during engine operation or engine stop.

When air conditioning is performed in the cool radiation mode during engine operation or engine stop, the liquid refrigerant in the liquid receiver 28 flows into the cool radiation evaporator 77 through the control valve 30 due to the influence of suction of the refrigerant gas in the reaction casing 35. The liquid refrigerant flowing in the cool radiation evaporator 77 is heated and vaporized at the cool radiation evaporator 77 through heat exchanging with air flowing toward the passenger compartment. Thus, the liquid refrigerant becomes refrigerant gas of low pressure, which is absorbed into the cool storage/radiation absorbent 35a at the reaction casing 35.

According to the sixth preferred embodiment, the same advantageous effects as those mentioned in the paragraphs (1), (3), (5) through (7) are obtained. It is noted that the advantageous effect (7) is achieved by the provision of the closed first control valve 30, the check valve 75 and the closed fourth control valve 76.

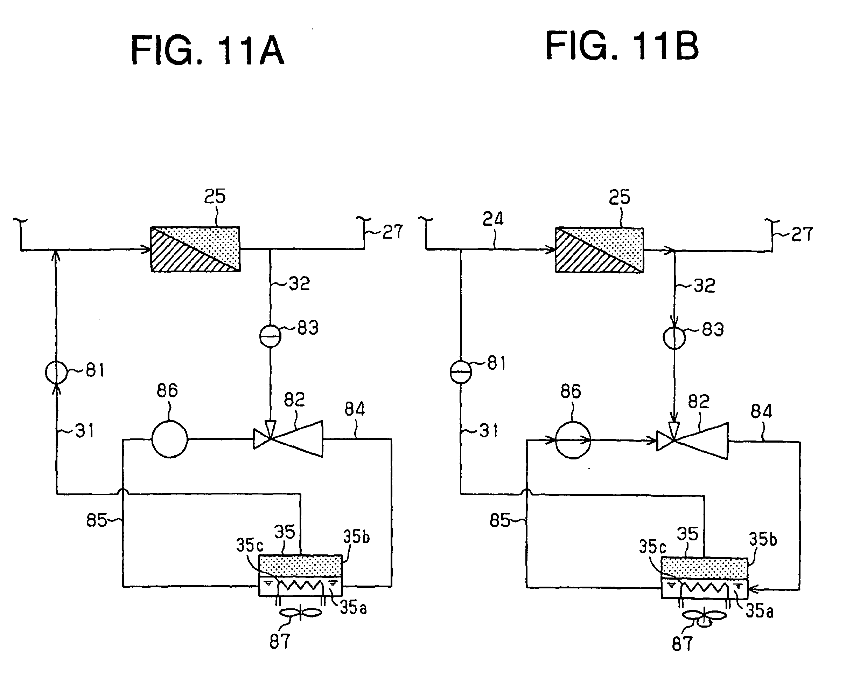

A seventh preferred embodiment of the present invention will now be described with reference to FIGS. 11 A, 11 B. The first branch refrigerant conduit 31 is directly connected to a gaseous phase portion of the tank 35b of the reaction casing 35. A fifth electromagnetic control valve 81 is disposed in the first branch refrigerant conduit 31. The suction side of a cool radiation ejector 82 is connected to one end of the second branch refrigerant conduit 32, and the one end is opposite from the side connected to the refrigerant conduit 27. A sixth control valve 83 is disposed in the second branch refrigerant conduit 32.

The cool radiation ejector 82 is connected at the discharge side thereof to the inlet of the liquid phase portion of the reaction casing 35 (tank 35b) through an absorbent conduit 84. The cool radiation ejector 82 is connected at the drive side thereof to the outlet of the liquid phase portion of the reaction casing 35 (tank 35b) through an absorbent conduit 85. A cool radiation pump 86 is disposed in the absorbent conduit 85 for feeding the cool storage/radiation absorbent 35a in the reaction casing 35 to the drive side of the cool radiation ejector 82. An electric fan 87 is arranged adjacent to the reaction casing 35 to blow air for cooling the reaction casing 35 (or the outer surface of the tank 35b).

As shown in FIG. 11 A, when the air conditioning is performed in the cool storage mode, the air conditioner ECU 41 commands "the fifth control valve 81 to be opened", "the sixth control valve 83 to be closed", "the cool radiation pump 86 to be stopped" and "the fan 87 to be stopped." In such a state, the refrigerant gas from the reaction casing 35 which serves as a regenerator is supplied to the refrigerant circuit through the first branch refrigerant conduit 31 and accumulated in the liquid receiver 28 (as shown in FIG. 1) as redundant refrigerant in liquid refrigerant. Though not shown in the drawing, in the regular mode of operation, the air conditioner ECU 41 commands "the fifth control valve 81 to be closed", "the sixth control valve 83 to be closed", "the cool radiation pump 86 to be stopped" and "the fan 87 to be stopped."

As shown in FIG. 11 B, in the cool radiation mode during engine operation or engine stop, the air conditioner ECU 41 commands "the fifth control valve 81 to be closed", "the sixth control valve 83 to be opened", "the cool radiation pump 86 to be operated" and "the fan 87 to be operated."

In such a state, the cool radiation ejector 82 is driven by the cool storage/radiation absorbent 35a which is fed by the cool radiation pump 86, and then the refrigerant gas in the refrigerant conduit 27 (the refrigerant circuit) is introduced into the cool radiation ejector 82 through the second branch refrigerant conduit 32. The refrigerant gas thus introduced into the cool radiation ejector 82 is mixed with the cool storage/radiation absorbent 35a at the cool radiation ejector 82, and then flows into the reaction casing 35 through the absorbent conduit 84.

According to the seventh preferred embodiment, the same advantageous effects as those of the first preferred embodiment are obtained. Additionally, when the reaction casing 35 serves as an absorber, the fan 87 serves as a cooler for cooling the reaction casing 35 (the tank 35b) by blowing air. Accordingly, the temperature of the cool storage/radiation absorbent 35a is further lowered, so that the refrigerant gas is effectively absorbed into the cool storage/radiation absorbent 35a. When the reaction casing 35 serves as an absorber, the cool storage/radiation absorbent 35a and the refrigerant gas are mixed at the cool radiation ejector 82. The influence of mixing promotes the refrigerant gas to be effectively absorbed into the cool storage/radiation absorbent 35a in the reaction casing 35.

In summary, plural kinds of recovery accelerators are provided in the seventh preferred embodiment. The recovery accelerators includes a structure for supplying the low temperature coolant cooled by the radiator 13 to the heat exchanger 35c of the reaction casing 35, a structure for positively mixing the cool storage/radiation absorbent 35a with the refrigerant gas (i.e. the cool radiation ejector 82, the cool radiation pump 86, the absorbent conduits 84, 85 and the like), and the fan 87 for blowing air to the reaction casing 35.

The present invention is not limited to the embodiments described above but may be modified into the following alternative embodiments.

In an alternative embodiment to the first through seventh preferred embodiments, a heat insulating material is provided around the liquid receiver 28. By so doing, the liquid refrigerant in the liquid receiver 28 is prevented from being vaporized due to the influence of heat from the ambient air, so that, for example, when the air conditioning is in the cool radiation mode during engine stop, cooling is performed relatively for a long time.

In an alternative embodiment to the second through fourth preferred embodiments, the liquid receiver 28 is disposed in the refrigerant conduit 24 between the expansion valve 26 and the cycle evaporator 25, as in the fifth preferred embodiment.

In an alternative embodiment to the second preferred embodiment, the liquid receiver 28 is disposed in the refrigerant conduit 27 between the cycle evaporator 25 and the cycle ejector 51.

In an alternative embodiment to the third preferred embodiment, the liquid receiver 28 is disposed in the refrigerant conduit 27 between the cycle evaporator 25 and the cycle absorber 62.

In an alternative embodiment to the fourth preferred embodiment, the liquid receiver 28 is disposed in the refrigerant conduit 27 between the cycle evaporator 25 and the heads 67, 68, and is located near the cycle evaporator 25 relative to the branch point (strictly, near the cycle evaporator 25 relative to the check valve 71).

In an alternative embodiment to the sixth preferred embodiment, the first branch refrigerant conduit 31 is used as a refrigerant conduit for cool storage and cool radiation by omitting the check valve 75, the cool radiation evaporator 77, the first control valve 30, the fourth control valve 76 and the second branch refrigerant conduit 32. Also, the cool radiation mode during engine operation is omitted from the air conditioning modes. Furthermore, the selector valve 33 is replaced by a simple control valve having a closed position for the regular mode and an opened position for the cool storage mode and the cool radiation mode during engine stop.

In this case, the cycle evaporator 25 doubles as a cool radiation evaporator, so that when the air conditioning is in the cool radiation mode during engine stop, the liquid refrigerant in the liquid receiver 28 flows into the cycle evaporator 25 from the side opposite to the other side where the liquid refrigerant flows into the cycle evaporator 25 during operation of the refrigerant circuit. The refrigerant gas heated and vaporized at the cycle evaporator 25 flows into the reaction casing 35 through the first branch refrigerant conduit 31 and the opened control valve.

In an alternative embodiment to the second through sixth preferred embodiments, at least one of plural kinds of the recovery accelerators (the structure for positively mixing the cool storage/radiation absorbent 35a with the refrigerant gas, and the fan 87) as described in the seventh preferred embodiment is applied to the refrigeration cycle device 12.

In an alternative embodiment, an agitator is provided as a recovery accelerator in the tank 35b of the reaction casing 35 for agitating the cool storage/radiation absorbent 35a.

In the above preferred embodiments, the low temperature coolant cooled by the radiator 13 which is shared in common with the engine 11 is supplied to the reaction casing 35 which serves as an absorber. In an alternative embodiment, a radiator for exclusive cooling of the reaction casing 35 is provided separately from the radiator 13 for cooling the engine 11. Furthermore, a coolant circulation circuit is provided for exclusively cooling the reaction casing 35.

In an alternative embodiment to the first through sixth preferred embodiments, the reaction casing 35 serves as an absorber only for natural heat radiation (only for stopping the heater).

In the preferred embodiments, the reaction casing 35 heated by the high temperature coolant which has cooled the engine 11 serves as a regenerator. In an alternative embodiment, the reaction casing 35 is heated by exhaust gas from the engine 11, thus serving as a regenerator.

In the preferred embodiments, the reaction casing 35 heated by exhaust heat from the engine 11 serves as a regenerator. In an alternative embodiment, the reaction casing 35 includes a heater (e.g., an electric heater) exclusively for allowing the reaction casing 35 to serve a regenerator.

Exhaust heat from the engine 11 is used for driving the ejector 51 (heating the refrigerant in the boiler 54) in the second preferred embodiment, for heating the regenerator 61 in the third preferred embodiment, and for heating the heads 67, 68 in the fourth preferred embodiment, respectively. An embodiment of the invention is not limited to the use of exhaust heat from the engine 11. In alternative embodiments to the second, third and fourth preferred embodiments, a heat source (e.g., an electric heater) is used for heating the refrigerant in the boiler 54 in the second preferred embodiment, for heating the regenerator 61 in the third preferred embodiment and for heating the heads 67, 68 in the fourth preferred embodiment, respectively.

In the preferred embodiments, when the air conditioning is in the regular mode, there is no coolant flow into the reaction casing 35. In an alternative embodiment, when the air conditioning is in the regular mode, the air conditioner ECU 41 commands "the second control valve 17 to be opened", "the third control valve 39 to be closed" and "the second water pump 37 to be operated" so that the low temperature coolant cooled by the radiator 13 is supplied to the reaction casing 35 (the heat exchanger 35c) and, therefore, the cool storage/radiation absorbent 35a is cooled. By so arranging, when the air conditioning mode is changed from the regular mode to the cool radiation mode during engine operation or engine stop, the reaction casing 35 quickly performs the function of an absorber, so that sufficient cooling capacity is achieved immediately just after the change of the air conditioning mode.

In an alternative embodiment to the preferred embodiments, the air conditioner ECU 41 executes the cool storage mode when the air conditioner switch 43 is off. In this case, in order to keep cooling operation from occurring as far as the switch 43 is off, the air conditioner ECU 41 commands the air blowing duct to be closed, or an air blowing fan (not shown) provided in the duct for blowing air into the passenger compartment to be stopped.

In the first through sixth preferred embodiments, the reaction casing 35 selectively serves as a regenerator for the refrigerant gas and as an absorber for the refrigerant gas. In an alternative embodiment, the tank 35b of the reaction casing 35 accommodates the cool storage/radiation adsorbent (e.g., activated carbon), so that the reaction casing 35 selectively serves as a desorber or a release device for the refrigerant gas, and also as an adsorber or a recovery device for the refrigerant gas.

In the preferred embodiments, the liquid receiver 28 is disposed inside the refrigerant circuit. Disposition of the liquid receiver is not limited to inside the refrigerant circuit, but, in an alternative embodiment, the liquid receiver is disposed outside the refrigerant circuit.

In an alternative embodiment, the present invention is applied to a refrigeration cycle device for use in an air conditioner other than for a vehicle, such as for a house and a factory.

In an alternative embodiment, the present invention is applied to a refrigeration cycle device which employs carbon dioxide as refrigerant.

Therefore, the present examples and embodiments are to be considered as illustrative and not restrictive, and the invention is not to be limited to the details given herein but may be modified within the scope of the appended claims.

## Claims

1. A refrigeration cycle device (12) having a refrigerant circuit, **characterized in that** a liquid receiver (28) is disposed in the refrigerant circuit for accumulating liquid refrigerant, **in that** a reaction casing (35) is connected to the liquid receiver (28), the reaction casing (35) selectively serving as a release device for releasing refrigerant gas and as a recovery device for recovering the refrigerant gas, **in that** a cool radiation evaporator (25) is disposed in a refrigerant passage between the liquid receiver (28) and the reaction casing (35) when the reaction casing (35) serves as the recovery device, the cool radiation evaporator (25) heating the liquid refrigerant sent from the liquid receiver (28), and **in that** a cool storage/radiation controller (33) is provided for allowing the reaction casing (35) to serve as one of the release device for performing cool storage and the recovery device for performing cool radiation.

2. The refrigeration cycle device according to claim 1, wherein the refrigerant circuit includes a condenser (23) and a decompressor (26), the liquid receiver (28) being disposed in the refrigerant passage between an outlet of the condenser (23) and an inlet of the decompressor (28).

3. The refrigeration cycle device according to any one of claims 1 and 2, wherein the refrigerant circuit is provided for a vehicle, the refrigeration cycle device further comprising a heater (35c) for heating the reaction casing (35) by exhaust heat from an engine (11) for driving the vehicle, wherein the cool storage/radiation controller (33) allows the reaction casing (35) to serve as the release device by operating the heater (35c) and allows the reaction casing (35) to serve as the recovery device by stopping the heater (35c).

4. The refrigeration cycle device according to any one of claims 1 through 3, wherein the refrigerant circuit includes a cycle evaporator (25) which doubles as the cool radiation evaporator (25).

5. The refrigeration cycle device according to any one of claims 1 through 4, further comprising a recovery accelerator for accelerating to recover the refrigerant gas in the reaction casing (35) when the reaction casing (35) serves as the recovery device.

6. The refrigeration cycle device according to claim 5, wherein the recovery accelerator includes a cool radiation ejector (82) disposed downstream of the cool radiation evaporator in the refrigerant passage between the liquid receiver (28) and the reaction casing (35) when the reaction casing (35) serves as an absorber, refrigerant sent from the cool radiation evaporator being introduced into a suction side of the cool radiation ejector (82), a discharge side of the cool radiation ejector (82) being connected to an inlet of the reaction casing (35), a driving side of the cool radiation ejector (82) being connected to an outlet of the reaction casing (35), and a cool radiation pump (86) feeding a cool storage/radiation absorbent (35a) from the reaction casing (35) to the driving side of the cool radiation ejector (82).

7. The refrigeration cycle device according to claim 5, wherein a cooler (87) for cooling the reaction casing (35) serves as the recovery accelerator.

8. The refrigeration cycle device according to claim 7, wherein a fan (87) for blowing air to the reaction casing (35) serves as the cooler.

9. The refrigeration cycle device according to claim 7, wherein the refrigerant circuit is provided for a vehicle, which includes an engine (11) for driving the vehicle, a radiator (13) and a coolant circulation circuit for cooling the engine (11) by circulating coolant between the engine (11) and the radiator (13), the cooler cooling the reaction casing (35) by the coolant cooled by the radiator (13).

10. The refrigeration cycle device according to any one of claims 1 through 9, **characterized in that** an information detector (42) is provided for detecting thermal load information of the refrigerant circuit, wherein the cool storage/radiation controller (41) executes cool radiation by controlling the reaction casing (35) to serve as the recovery device when the cool storage/radiation controller (41) determines thermal load of the refrigerant circuit exceeds a predetermined value based upon information detected by the information detector (42) during operation of the refrigerant circuit.

11. The refrigeration cycle device according to any one of claims 1 through 10, wherein the refrigerant circuit is a vapor compression type.

12. The refrigeration cycle device according to any one of claims 1 through 10, wherein the refrigerant circuit is a steam jet type.

13. The refrigeration cycle device according to any one of claims 1 through 10, wherein the refrigerant circuit is a vapor absorption type.

14. The refrigeration cycle device according to any one of claims 1 through 10, wherein the refrigerant circuit is a vapor adsorption type.

15. The refrigeration cycle device according to claim 1, wherein the refrigerant circuit includes a decompressor (26) and a cycle evaporator (25), the liquid receiver (28) being disposed in the refrigerant passage between an outlet of the decompressor (26) and an inlet of the cycle evaporator (25).

16. The refrigeration cycle device according to claim 1, wherein the refrigerant circuit is a vapor compression type and includes a condenser (23) and a cycle evaporator (25), the liquid receiver (28) being disposed in the refrigerant passage between an outlet of the condenser (23) and an inlet of the cycle evaporator (25).

17. The refrigeration cycle device according to claim 1, wherein the refrigerant circuit is a vapor compression type and includes a cycle evaporator (25) and a compressor (21), the liquid receiver (28) being disposed in the refrigerant passage between an outlet of the cycle evaporator (25) and a low pressure side of the compressor (21).

18. The refrigeration cycle device according to claim 1, wherein the refrigerant circuit is a steam jet type and includes a condenser (23) and a cycle ejector (51), the liquid receiver (28) being disposed in the refrigerant passage between an outlet of the condenser (23) and a low pressure side of the cycle ejector (51).

19. The refrigeration cycle device according to claim 1, wherein the refrigerant circuit is a vapor absorption type and includes a cycle evaporator (25) and a condenser (23), the liquid receiver (28) being disposed in the refrigerant passage between an outlet of the condenser (23) and an inlet of the cycle evaporator (25).

20. The refrigeration cycle device according to claim 1, wherein the refrigerant circuit is a vapor adsorption type and includes a cycle evaporator (25) and a head, the liquid receiver being disposed in the refrigerant passage between an inlet of the cycle evaporator and an outlet of the head.

21. The refrigeration cycle device according to any one of claims 1 through 20, **characterized in that** a liquid receiver control valve (29) is provided for selectively opening and sealing the liquid receiver (28), and **in that** a liquid receiver controller is provided for sealing the liquid receiver (28) by actuating the liquid receiver control valve (29) when cooling is unnecessary.

22. The refrigeration cycle device according to any one of claims 1 and 2, **characterized in that** a heater (35c) is provided for heating the reaction casing (35), wherein the cool storage/radiation controller (41) operates the heater (35c) to operate the reaction casing (35) as the release device and stops the heater (35c) to operate the reaction casing (35) as recovery device.

## Patentansprüche

1. Kühlkreislaufvorrichtung (12) mit einem Kühlmittelkreis, **dadurch gekennzeichnet, dass** ein Flüssigkeitsempfänger (28) in dem Kühlmittelkreis angeordnet ist zum Sammeln von flüssigem Kühlmittel, dass ein Reaktionsgehäuse (35) mit dem Flüssigkeitsempfänger (28) verbunden ist, wobei das Reaktionsgehäuse (35) wahlweise als eine Freigabevorrichtung zum Freigeben von Kühlmittelgas und als eine Rückgewinnungsvorrichtung zum Rückgewinnen des Kühlmittelgases dient, dass ein Kälteabstrahlungsverdampfer (25) in einem Kühlmitteldurchgang zwischen dem Flüssigkeitsempfänger (28) und dem Reaktionsgehäuse (35) angeordnet ist, wenn das Reaktionsgehäuse (35) als die Rückgewinnungsvorrichtung dient, wobei der Kälteabstrahlungsverdampfer (25) das von dem Flüssigkeitsempfänger (28) gesendete flüssige Kühlmittel erwärmt, und dass eine Kältespeicherungs/-abstrahlungs-Steuereinheit (33) bereitgestellt ist zum Ermöglichen, dass das Reaktionsgehäuse (35) als eine von der Freigabevorrichtung zum Durchführen einer Kältespeicherung und der Rückgewinnungsvorrichtung zum Durchführen einer Kälteabstrahlung dient.

2. Kühlkreislaufvorrichtung gemäß Anspruch 1, wobei der Kühlmittelkreis einen Verdichter bzw. Kondenser (23) und einen Dekompressor (26) enthält, wobei der Flüssigkeitsempfänger (28) in dem Kühlmitteldurchgang zwischen einem Auslass des Verdichters (23) und einem Einlass des Dekompressors (28) angeordnet ist.

3. Kühlkreislaufvorrichtung gemäß Anspruch 1 oder 2, wobei der Kühlmittelkreis für ein Fahrzeug bereitgestellt ist, und die Kühlkreislaufvorrichtung ferner ein Heizelement (35c) zum Erwärmen des Reaktionsgehäuses (35) durch Abgaswärme von einem Motor (11) zum Antreiben des Fahrzeugs umfasst, wobei die Kältespeicherungs/-abstrahlungs-Steuereinheit (33) dem Reaktionsgehäuse (35) ermöglicht, als die Freigabevorrichtung zu dienen durch Betreiben des Heizelementes (35c), und dem Reaktionsgehäuse (35) ermöglicht, als die Rückgewinnungsvorrichtung zu dienen durch Stoppen des Heizelementes (35c).

4. Kühlkreislaufvorrichtung gemäß einem der Ansprüche 1 bis 3, wobei der Kühlmittelkreis einen Kreislaufverdampfer (25) enthält, der als der Kälteabstrahlungsverdampfer (25) doppelwirkt bzw. doubliert.

5. Kühlkreislaufvorrichtung gemäß einem der Ansprüche 1 bis 4, ferner einen Rückgewinnungsbeschleuniger umfassend zum Beschleunigen des Rückgewinnens des Kühlmittelgases in dem Reaktionsgehäuse (35), wenn das Reaktionsgehäuse (35) als die Rückgewinnungsvorrichtung dient.

6. Kühlkreislaufvorrichtung gemäß Anspruch 5, wobei der Rückgewinnungsbeschleuniger eine Kälteabstrahlungsausstoßvorrichtung (82) enthält, die abwärts des Kälteabstrahlungsverdampfers in dem Kühlmitteldurchgang zwischen dem Flüssigkeitsempfänger (28) und dem Reaktionsgehäuse (35) angeordnet ist, wenn das Reaktionsgehäuse (35) als ein Absorber dient, wobei das von dem Kälteabstrahlungsverdampfer gesendete Kühlmittel einer Ansaugseite bzw. Einlassseite der Kälteabstrahlungsausstoßvorrichtung (82) zugeführt wird, wobei eine Austrittsseite der Kälteabstrahlungsausstoßvorrichtung (82) mit einem Einlass des Reaktionsgehäuses (35) verbunden ist, wobei eine Treiberseite bzw. Antriebsseite der Kälteabstrahlungsausstoßvorrichtung (82) mit einem Auslass des Reaktionsgehäuses (35) verbunden ist, und eine Kälteabstrahlungspumpe (86), die ein Kühlspeicherungs/-abstrahlungsabsorptionsmittel (35a) von dem Reaktionsgehäuse (35) zu der Treiberseite der Kälteabstrahlungsausstoßvorrichtung (82) speist.

7. Kühlkreislaufvorrichtung gemäß Anspruch 5, wobei ein Kühler (87) zum Kühlen des Reaktionsgehäuses (35) als der Rückgewinnungsbeschleuniger dient.

8. Kühlkreislaufvorrichtung gemäß Anspruch 7, wobei ein Lüfter (87) zum Blasen von Luft zu dem Reaktionsgehäuse (35) als Kühler dient.

9. Kühlkreislaufvorrichtung gemäß Anspruch 7, wobei der Kühlmittelkreis für ein Fahrzeug bereitgestellt ist, das einen Motor (11) zum Antreiben des Fahrzeugs enthält, einen Motorkühler (13) und einen Kühlmittelumwälzkreis zum Kühlen des Motors durch Umwälzen des Kühlmittels zwischen dem Motor (11) und dem Motorkühler (15), wobei der Kühler das Reaktionsgehäuse (35) durch das durch den Motorkühler (13) gekühlte Kühlmittel kühlt.

10. Kühlkreislaufvorrichtung gemäß einem der Ansprüche 1 bis 9, **dadurch gekennzeichnet, dass** ein Informationsdetektor (42) bereitgestellt ist zum Detektieren einer Information einer thermischen Last des Kühlmittelkreises, wobei die Kältespeicherungs/-abstrahlungs-Steuereinheit (41) eine Kälteabstrahlung ausführt durch Steuern des Reaktionsgehäuses (35), als die Rückgewinnungsvorrichtung zu dienen, wenn die Kältespeicherungs/-abstrahlungs-Steuereinheit (41) bestimmt, dass die thermische Last des Kühlmittelkreises einen vorbestimmten Wert überschreitet basierend auf einer durch den Informationsdetektor (42) detektierten Information während des Betriebs des Kühlmittelkreises.

11. Kühlkreislaufvorrichtung gemäß einem der Ansprüche 1 bis 10, wobei der Kühlmittelkreis vom Dampfkompressionstyp ist.

12. Kühlkreislaufvorrichtung gemäß einem der Ansprüche 1 bis 10, wobei der Kühlmittelkreis vom Dampfstrahltyp ist.

13. Kühlkreislaufvorrichtung gemäß einem der Ansprüche 1 bis 10, wobei der Kühlmittelkreis vom Dampfabsorptionstyp ist.

14. Kühlkreislaufvorrichtung gemäß einem der Ansprüche 1 bis 10, wobei der Kühlmittelkreis vom Dampfadsorptionstyp ist.

15. Kühlkreislaufvorrichtung gemäß Anspruch 1, wobei der Kühlmittelkreis einen Dekompressor (26) und einen Kreislaufverdampfer (25) enthält, wobei der Flüssigkeitsempfänger (28) in dem Kühlmitteldurchgang zwischen einem Auslass des Dekompressors (26) und einem Einlass des Kreislaufverdampfers (25) angeordnet ist.

16. Kühlkreislaufvorrichtung gemäß Anspruch 1, wobei der Kühlmittelkreis vom Dampfkompressionstyp ist und einen Verdichter (23) und einen Kreislaufverdampfer (25) enthält, wobei der Flüssigkeitsempfänger (28) in dem Kühlmitteldurchgang zwischen einem Auslass des Verdichters (23) und einem Einlass des Kreislaufverdampfers (25) angeordnet ist.

17. Kühlkreislaufvorrichtung gemäß Anspruch 1, wobei der Kühlmittelkreis vom Dampfkompressionstyp ist und einen Kreislaufverdampfer (25) und einen Kompressor (21) enthält, wobei der Flüssigkeitsempfänger (28) in dem Kühlmitteldurchgang zwischen einem Auslass des Kreislaufverdampfers (25) und einer Niederdruckseite des Kompressors (21) angeordnet ist.

18. Kühlkreislaufvorrichtung gemäß Anspruch 1, wobei der Kühlmittelkreis vom Dampfstrahltyp ist und einen Verdichter (23) und eine Kreisausstoßvorrichtung (51) enthält, wobei der Flüssigkeitsempfänger (28) in dem Kühlmitteldurchgang zwischen einem Auslass des Verdichters (23) und einer Niederdruckseite der Kreisausstoßvorrichtung (51) angeordnet ist.

19. Kühlkreislaufvorrichtung gemäß Anspruch 1, wobei der Kühlmittelkreis vom Dampfabsorptionstyp ist und einen Kreislaufverdampfer (25) und einen Verdichter (23) enthält, wobei der Flüssigkeitsempfänger (28) in dem Kühlmitteldurchgang zwischen einem Auslass des Verdichters (23) und einem Einlass des Kreislaufverdampfers (25) angeordnet ist.

20. Kühlkreislaufvorrichtung gemäß Anspruch 1, wobei der Kühlmittelkreis vom Dampfadsorptionstyp ist und einen Kreislaufverdampfer (25) und ein Kopfelement enthält, wobei der Flüssigkeitsempfänger in dem Kühlmitteldurchgang zwischen einem Einlass des Kreislaufverdampfers und einem Auslass des Kopfelementes angeordnet ist.

21. Kühlkreislaufvorrichtung gemäß einem der Ansprüche 1 bis 20, **dadurch gekennzeichnet, dass** ein Steuerungsventil (29) für den Flüssigkeitsempfänger bereitgestellt ist zum wahlweisen Öffnen und Absperren des Flüssigkeitsempfängers (28), und dass eine Steuerungseinheit für den Flüssigkeitsempfänger bereitgestellt ist zum Absperren des Flüssigkeitsempfängers (28) durch Betätigen des Steuerungsventils (29) für den Flüssigkeitsempfänger, wenn ein Kühlen unnötig ist.

22. Kühlkreislaufvorrichtung gemäß Anspruch 1 oder 2, **dadurch gekennzeichnet, dass** ein Heizelement (35c) bereitgestellt ist zum Erwärmen des Reaktionsgehäuses (35), wobei die Kältespeicherungs/-abstrahlungs-Steuereinheit (41) das Heizelement (35c) betreibt, um das Reaktionsgehäuse (35) als die Freigabevorrichtung zu betreiben, und das Heizelement (35c) stoppt, um das Reaktionsgehäuse (35) als die Rückgewinnungsvorrichtung zu betreiben.

## Revendications

1. Dispositif pour cycle de refroidissement (12) ayant un circuit de réfrigérant, **caractérisé en ce qu'**un récepteur de liquide (28) est disposé dans le circuit de réfrigérant afin d'accumuler du réfrigérant liquide, **en ce qu'**un carter de réaction (35) est raccordé au récepteur de liquide (28), le carter de réaction (35) servant, de manière sélective, de dispositif d'alimentation, permettant d'alimenter le gaz réfrigérant et de dispositif de récupération permettant de récupérer le gaz réfrigérant, **en ce qu'**un évaporateur à rayonnement froid (25) est disposé dans un passage de réfrigérant entre le récepteur de liquide (28) et le carter de réaction (35), lorsque le carter de réaction (35) sert de dispositif de récupération, l'évaporateur à rayonnement froid (25) chauffant le réfrigérant liquide envoyé depuis le récepteur de liquide (28), et **en ce qu'**un dispositif de commande du rayonnement froid/stockage de froid (33) est fourni pour permettre au carter de réaction (35) de servir de l'un des dispositif d'alimentation permettant d'effectuer un stockage de froid et dispositif de récupération permettant d'effectuer un rayonnement froid.

2. Dispositif pour cycle de refroidissement selon la revendication 1, dans lequel le circuit de refroidissement inclut un condenseur (23) et un décompresseur (26), le récepteur de liquide (28) étant disposé dans le passage de réfrigérant entre un orifice de sortie du condenseur (23) et un orifice d'entrée du décompresseur (28).

3. Dispositif pour cycle de refroidissement selon l'une quelconque des revendications 1 et 2, dans lequel le circuit de réfrigérant est fourni pour un véhicule, le dispositif pour cycle de refroidissement comprenant en outre un système chauffant (35c) destiné à chauffer le carter de réaction (35) grâce à la chaleur d'échappement provenant d'un moteur (11) destiné à entraîner le véhicule, dans lequel le dispositif de commande du rayonnement froid/stockage de froid (33) sert de dispositif d'alimentation par chauffage du carter de réaction (35) et permet au carter de réaction (35) de servir de dispositif de récupération en arrêtant le système chauffant (35c).

4. Dispositif pour cycle de refroidissement selon l'une quelconque des revendications 1 à 3, dans lequel le circuit de réfrigérant inclut un évaporateur pour cycle frigorifique (25) qui sert aussi d'évaporateur à rayonnement froid (25).

5. Dispositif pour cycle de refroidissement selon l'une quelconque des revendications 1 à 4, comprenant en outre un accélérateur de récupération destiné à accélérer pour récupérer le gaz réfrigérant dans le carter de réaction (35), lorsque le carter de réaction (35) sert de dispositif de récupération.

6. Dispositif pour cycle frigorifique selon la revendication 5, dans lequel l'accélérateur de récupération inclut un éjecteur à rayonnement froid (82) disposé en aval de l'évaporateur à rayonnement froid (25) dans le passage de réfrigérant, entre le récepteur de liquide (28) et le carter de réaction (35), lorsque le carter de réaction (35) sert d'absorbeur, le réfrigérant envoyé depuis l'évaporateur à rayonnement froid (25) étant introduit dans un côté aspiration de l'éjecteur à rayonnement froid (82), un côté refoulement de l'éjecteur à rayonnement froid (82) étant raccordé à un orifice d'admission du carter de réaction (35), un côté entraînement de l'éjecteur à rayonnement froid (82) étant raccordé à un orifice de sortie du carter de réaction (35), et une pompe à rayonnement froid (86) alimentant une substance absorbante de rayonnement froid/stockage de froid (35c) provenant du carter de réaction (35) du côté entraînement de l'éjecteur à rayonnement froid (82).

7. Dispositif pour cycle frigorifique selon la revendication 5, dans lequel un refroidisseur (87) destiné à refroidir le carter de réaction (35) sert d'accélérateur de récupération.

8. Dispositif pour cycle frigorifique selon la revendication 7, dans lequel un ventilateur (87) destiné à souffler de l'air vers le carter de réaction (35) sert de refroidisseur.

9. Dispositif pour cycle frigorifique selon la revendication 7, dans lequel le circuit de réfrigérant est fourni pour un véhicule, qui inclut un moteur (11) destiné à entraîner le véhicule, un radiateur (13) et un circuit de circulation du liquide de refroidissement destiné à refroidir le moteur (11) en faisant circuler le liquide de refroidissement entre le moteur (11) et le radiateur (13), le refroidisseur refroidissant le carter de réaction (35) grâce au liquide de refroidissement refroidi par le radiateur (13).

10. Dispositif pour cycle de refroidissement selon l'une quelconque des revendications 1 à 9, **caractérisé en ce qu'**un détecteur d'informations (42) est fourni pour détecter les informations relatives à la charge thermique du circuit de réfrigérant, dans lequel le dispositif de commande du rayonnement froid/stockage de froid (41) exécute un rayonnement froid en commandant le carter de réaction (35) pour qu'il serve de dispositif de récupération lorsque le dispositif de commande du rayonnement froid/stockage de froid (41) détermine que la charge thermique du circuit de réfrigérant est supérieure à une valeur prédéterminée fondée sur les informations détectées par le détecteur d'informations (42) au cours du fonctionnement du circuit de réfrigérant.

11. Dispositif pour cycle de refroidissement selon l'une quelconque des revendications 1 à 10, dans lequel le circuit de réfrigérant est du type à compression de vapeur.

12. Dispositif pour cycle de refroidissement selon l'une quelconque des revendications 1 à 10, dans lequel le circuit de réfrigérant est du type à jet de vapeur.

13. Dispositif pour cycle de refroidissement selon l'une quelconque des revendications 1 à 10, dans lequel le circuit de réfrigérant est du type à absorption de vapeur.

14. Dispositif pour cycle de refroidissement selon l'une quelconque des revendications 1 à 10, dans lequel le circuit de réfrigérant est du type à adsorption de vapeur.

15. Dispositif pour cycle frigorifique selon la revendication 1, dans lequel le circuit de réfrigérant inclut un décompresseur (26) et un évaporateur pour cycle frigorifique (25), le récepteur de liquide (28) étant disposé dans le passage de réfrigérant entre un orifice de sortie du décompresseur (26) et un orifice d'entrée de l'évaporateur pour cycle frigorifique (25).

16. Dispositif pour cycle frigorifique selon la revendication 1, dans lequel le circuit de réfrigérant est du type à compression de vapeur et inclut un condenseur (23) et un évaporateur pour cycle frigorifique (25), le récepteur de liquide (28) étant disposé dans le passage de réfrigérant entre un orifice de sortie du condenseur (23) et un orifice d'entrée de l'évaporateur pour cycle frigorifique (25).

17. Dispositif pour cycle frigorifique selon la revendication 1, dans lequel le circuit de réfrigérant est du type à compression de vapeur et inclut un évaporateur pour cycle frigorifique (25) et un compresseur (21), le récepteur de liquide (28) étant disposé dans le passage de réfrigérant entre un orifice de sortie de l'évaporateur pour cycle frigorifique (25) et un côté basse pression du compresseur (21).

18. Dispositif pour cycle frigorifique selon la revendication 1, dans lequel le circuit de réfrigérant est du type à jet de vapeur et inclut un condenseur (23) et un éjecteur pour cycle frigorifique (51), le récepteur de liquide (28) étant disposé dans le passage de réfrigérant entre un orifice de sortie du condenseur (23) et un côté basse pression de l'éjecteur pour cycle frigorifique (51).

19. Dispositif pour cycle frigorifique selon la revendication 1, dans lequel le circuit de réfrigérant est du type à absorption de vapeur et inclut un évaporateur pour cycle frigorifique (25) et un condenseur (23), le récepteur de liquide (28) étant disposé dans le passage de réfrigérant entre un orifice de sortie du condenseur (23) et un orifice d'entrée de l'évaporateur pour cycle frigorifique (25).

20. Dispositif pour cycle frigorifique selon la revendication 1, dans lequel le circuit de réfrigérant est du type à adsorption de vapeur et inclut un évaporateur pour cycle frigorifique (25) et une tête, le récepteur de liquide étant disposé dans le passage de réfrigérant entre un orifice d'entrée de l'évaporateur pour cycle frigorifique et un orifice de sortie de la tête.

21. Dispositif pour cycle frigorifique selon l'une quelconque des revendications 1 à 20, **caractérisé en ce qu'**une soupape de commande du récepteur de liquide (29) est fournie pour ouvrir et fermer hermétiquement, de manière sélective, le récepteur de liquide (28), et **en ce qu'**un dispositif de commande du récepteur de liquide est fourni pour fermer hermétiquement le récepteur de liquide (28) en actionnant la soupape de commande du récepteur de liquide (29), lorsque le refroidissement n'est pas nécessaire.

22. Dispositif pour cycle frigorifique selon l'une quelconque des revendications 1 et 2, **caractérisé en ce qu'**un système chauffant (35c) est fourni pour chauffer le carter de réaction (35), dans lequel le dispositif de commande du rayonnement froid/stockage de froid (41) fait fonctionner le système chauffant (35c) pour faire fonctionner le carter de réaction (35) comme dispositif d'alimentation et arrête le système chauffant (35c) pour faire fonctionner le carter de réaction (35) comme dispositif de récupération.
